# EUROPÄISCHE PATENTSCHRIFT

(11) **EP 1 378 018 B1**
(45) Veröffentlichungstag und Bekanntmachung des Hinweises auf die Patenterteilung: **27.07.2011**
(21) Anmeldenummer: 01273107.1
(22) Anmeldetag: 15.12.2001
(51) Int. Cl.: H01M 8/02, H01M 8/24

(54) **ELEKTROCHEMISCHER BRENNSTOFFZELLENSTAPEL**
ELECTROCHEMICAL FUEL CELL STACK
EMPILEMENT DE CELLULES ELECTROCHIMIQUES

(30) Priorität: 10.01.2001 DE 10100757
(43) Veröffentlichungstag der Anmeldung: 07.01.2004
(73) Patentinhaber: Daimler AG, 70327 Stuttgart (DE)
(72) Erfinder: BLANK, Felix, 78464 Konstanz (DE); SCHMID, Ottmar, 88677 Markdorf (DE); SCHUDY, Markus, 71638 Ludwigsburg (DE)
(74) Vertreter: JENSEN & SON
(86) Internationale Anmeldenummer: PCT/DE2001/004746
(87) Internationale Veröffentlichungsnummer: WO 2002/056402

(56) Entgegenhaltungen:
- WO-A-97/33331
- US-A- 6 071 635
- US-A- 6 099 984
- PATENT ABSTRACTS OF JAPAN vol. 2000, no. 06, 22. September 2000 (2000-09-22) -& JP 2000 090947 A (HONDA MOTOR CO LTD), 31. März 2000 (2000-03-31)
- PATENT ABSTRACTS OF JAPAN vol. 2000, no. 22, 9. März 2001 (2001-03-09) -& JP 2001 126746 A (TOSHIBA CORP), 11. Mai 2001 (2001-05-11)
- PATENT ABSTRACTS OF JAPAN vol. 2000, no. 06, 22. September 2000 (2000-09-22) -& JP 2000 067885 A (AISIN SEIKI CO LTD), 3. März 2000 (2000-03-03)
- PATENT ABSTRACTS OF JAPAN vol. 1997, no. 06, 30. Juni 1997 (1997-06-30) -& JP 09 050819 A (FUJI ELECTRIC CO LTD), 18. Februar 1997 (1997-02-18)
- PATENT ABSTRACTS OF JAPAN vol. 1999, no. 01, 29. Januar 1999 (1999-01-29) -& JP 10 284094 A (ASAHI GLASS CO LTD), 23. Oktober 1998 (1998-10-23)
- PATENT ABSTRACTS OF JAPAN vol. 017, no. 549 (E-1443), 4. Oktober 1993 (1993-10-04) -& JP 05 159790 A (TOKYO GAS CO LTD), 25. Juni 1993 (1993-06-25)

## Beschreibung

Die Erfindung betrifft einen elektrochemischen Brennstoffzellenstapel nach dem Oberbegriff des Patentanspruchs 1.

Brennstoffzellenstapel gemäß dem Stand der Technik umfassen mindestens eine, üblicherweise jedoch eine Mehrzahl einzelner Brennstoffzellen, die neben oder übereinander gestapelt sind. Eine einzelne Zelle umfasst zwei Verteilerplatten zur Verteilung der Fluide und einer dazwischen angeordneten Membran-Elektroden-Einheit, auch abgekürzt als MEA bezeichnet. Eine MEA umfasst dabei eine Anode, eine Kathode und eine dazwischen angeordnete, protonenleitende Elektrolytmembran. Mittels der protonenleitenden Elektrolytmembran (PEM) wird ein Protonentransport von der Anode zur Kathode gewährleistet. Die Verteilerplatten weisen anoden- und kathodenseitig Gaskanäle (Anoden- und Kathodenkanäle) zur Zu- und Abführung des brennstoffhaltigen Anodengases, z.B. Wasserstoff, und des sauerstoffhaltigen Kathodengases, z.B. Luft auf. Entlang der Gaskanäle bildet sich aufgrund der Gasströmung ein Druckgradient aus, wodurch das in der Brennstoffzellenreaktion gebildete Produktwasser aus den Gaskanälen transportiert wird.

Zwischen der MEA und der Verteilerplatte befinden sich üblicherweise gasdurchlässige Diffusionselektroden. Mittels dieser Gasdiffusionselektroden ist eine Diffusion des Anoden- und Kathodengases, im weiteren auch als Reaktionsgase bezeichnet, in die Bereiche möglich, in denen die MEA auf der Verteilerplatte aufliegt. Somit wird die aktive Fläche, an der ein Protonentransport und somit eine chemische Reaktion stattfinden kann, vergrößert. Eine solche Gasdiffusionselektrode ist z.B. in J P 3040369 beschrieben.

Die Gaskanäle zur Verteilung der Fluide sind üblicherweise serpentinenförmig zwischen den Portbereichen angeordnet. US 6 074 692 offenbart eine Ausführung einer Verteilerplatte in der die Fluide in serpentinenförmigen Gaskanälen geführt werden.

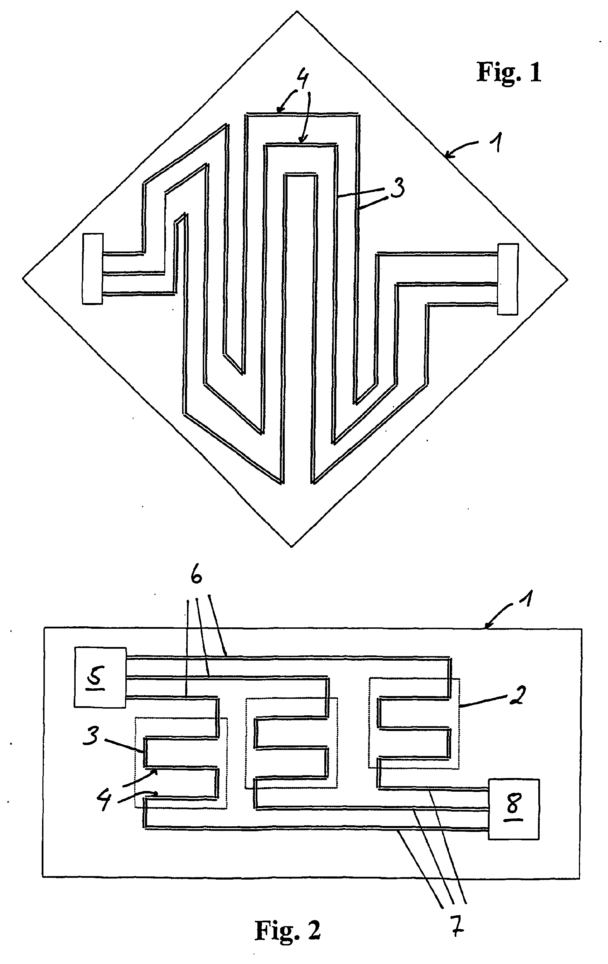

Fig. 1 zeigt eine Verteilerplatte **1** mit serpentinenförmig verlaufenden Gaskanälen **3** gemäß dem Stand der Technik. Zwischen den Portbereichen zur Zu- und Abführung der Reaktionsgase verlaufen serpentinenförmig mehrere, in einem Bündel zusammengefasste Gaskanäle **3.** Jeder Gaskanal **3** ist dabei in mehrere, zwischen Umlenkungen (Serpentine) befindliche Gaskanalabschnitte **4** unterteilt. Die Gaskanalabschnitte **4** benachbarter Gaskanäle **3** weisen somit unterschiedliche Längen auf, wodurch es zu Druckgradienten zwischen den einzelnen Gaskanalabschnitten **4** kommt. Das Reaktionsgas kann an Stellen, an denen benachbarte Gaskanalabschnitte **4** einen hohen Druckunterschied aufweisen, unkontrolliert über die Gasdiffusionselektrode von einem Gaskanalabschnitt **4** zu einem benachbarten Gaskanalabschnitt **4** strömen. Dadurch ist es möglich, dass Reaktionsgas von einem Gaskanal **3** in einen benachbarten Gaskanal **3** strömt. Es ist aber auch möglich, dass das Reaktionsgas über mehrere benachbarte Gaskanalabschnitte **4** strömt.
Somit kann es an bestimmten Stellen entlang der Gaskanäle zu einer Unterversorgung der MEA mit Reaktionsgas kommen, woraus Nachteile hinsichtlich der Leistung der Brennstoffzelle entstehen.
Es sei an dieser Stelle betont, dass es sich hierbei um eine unkontrollierte und undefinierte Strömung des Reaktionsgases zwischen benachbarten Gaskanälen über die gesamte Fläche der Verteilerplatte handelt. Eine definierte Strömung zwischen benachbarten Gaskanalabschnitten, so dass das Reaktionsgas in die Bereiche der MEA gelangt, in denen die Verteilerplatte auf der MEA aufliegt, ist zur Vergrößerung der aktiven Fläche und damit zur Vergrößerung der Brennstoffzellenleistung ist durchaus wünschenswert.

Eine weitere Möglichkeit der Gaskanalführung ist in EP 0955686 A1 beschrieben. Die Gaskanäle verlaufen zwischen den Portbereichen zur Zu- und Abführung der Reaktionsgase parallel und ohne Umlenkung. Aufgrund gleichlanger benachbarter Gaskanäle besteht zwischen benachbarten Gaskanälen kein Druckgradient. Dadurch wird eine Querströmung vollständig unterdrückt. Reaktionsgas kann somit nicht an die Stellen gelangen, an denen die MEA auf der Verteilerplatte aufliegt. Ein weiterer Nachteil ist, dass die Querschnitte der Gaskanäle deutlich verringert werden müssen, um einen angemessenen Druckgradient entlang der Gaskanäle zum Austrag des Produktwassers zu gewährleisten. Durch diese Verkleinerung der Gaskanalquerschnitte ergeben sich Nachteile hinsichtlich einer geforderten kleineren Fertigungstoleranz und dem damit verbundenen Anstieg der Fertigungskosten.

Aufgabe der Erfindung ist es, einen Brennstoffzellenstapel zu schaffen, mit dem es möglich ist, ohne dass es zu einer unkontrollierten Querströmung über die gesamte Fläche der Verteilerplatte kommt und ohne dass ein großer fertigungstechnischer Aufwand nötig ist, eine definierte Strömung zwischen Gaskanaläbschnitten zu realisieren, so dass Reaktionsgas an die Bereiche der MEA gelangt, in denen die MEA auf der Verteilerplatte aufliegt.

Diese Aufgabe wird mit dem Gegenstand des Patentanspruches 1 gelöst. Vorteilhafte Ausführungen der Erfindung sind Gegenstand von Unteransprüchen.

In dem erfindungsgemäßen Brennstoffzellenstapel sind die Gaskanäle im Kanalbereich der Verteilerplatte nicht mehr in einem Bündel zusammengefasst, sondern entflochten und auf mehrere voneinander getrennte Kanalgebiete verteilt, wobei in einem Kanalgebiet genau ein Gaskanal mit mindestens einer Umlenkung zwischen den Portbereichen zur Zu- und Abführung des Anoden- und/oder Kathodengases verläuft. Der Gaskanal kann z.B. serpentinenförmig innerhalb des Kanalgebietes verlaufen.

Durch die erfindungsgemäße Anordnung der Gaskanäle in voneinander getrennten Kanalgebiete wird die unerwünschte, unkontrollierte Querströmung zwischen benachbarten Gaskanälen unterdrückt. Innerhalb eines Kanalgebietes ist der Gaskanal durch die Umlenkung in benachbarte Gaskanalabschnitte unterteilt.
Die erfindungsgemäße Anordnung ermöglicht es, dass es zu einer erwünschten und definierten Querströmung innerhalb eines Gaskanals kommt. Eine definierte Querströmung findet somit nur zwischen den benachbarten Gaskanalabschnitten eines Gaskanals statt. Somit wird gewährleistet, dass die Bereiche, in denen die MEA auf der Verteilerplatte aufliegt mit Reaktionsgas versorgt wird. Wohingegen eine unerwünschte Querströmung zwischen benachbarten Kanalgebieten und somit zwischen verschiedenen Gaskanälen unterdrückt wird.
Ein weiterer Vorteil der Erfindung ist, dass die Entflechtung der Gaskanäle und die Aufteilung des Kanalbereichs der Verteilerplatte in benachbarte Kanalgebiete ohne großen fertigungstechnischen Aufwand realisiert werden kann.

Außerdem kommt es mittels der erfindungsgemäßen Anordnung der Gaskanäle zu keiner Unterversorgung bestimmter Gaskanalabschnitte mit Reaktionsgas. Des weiteren ist die Gleichverteilung der Reaktionsgase entlang der Gaskanäle sowie der Wasseraustrag aus den Gaskanälen gegeben. Hieraus ergeben sich Vorteile hinsichtlich der Leistung der Brennstoffzelle.

In einer vorteilhaften Ausführung der Erfindung kann der Druckgradient zwischen benachbarten Gaskanalabschnitten eines Gaskanals innerhalb eines Kanalgebietes mittels des Abstands zwischen benachbarten Gaskanalabschnitte angepasst werden. Daraus ergibt sich der Vorteil, dass zwischen benachbarten Gaskanalabschnitten ein definierter Querstrom möglich ist. Durch geeignete Anordnung der Gaskanalabschnitte eines Gaskanals kann z.B. erreicht werden, dass entlang des Gaskanals ein konstanter Druckgradient zwischen benachbarten Gaskanalabschnitten eines Gaskanals herrscht.
Um eine optimale Ausnutzung der Fläche der Verteilerplatte zu erhalten, sollte der Abstand zwischen des Gaskanalabschnitten nicht zu groß gewählt werden.

Insbesondere kann durch Variation der Zahl der erfindungsgemäßen Kanalgebiete in der Verteilerplatte die Gesamtlänge der Gaskanäle verändert werden. Dadurch kann der sich zwischen den Portbereichen für die Zu- und Abführung der Reaktionsgase ausbildende Druckverlust eingestellt werden.

In einer weiteren bevorzugten Ausführung der Erfindung weist die Strömung des Reaktionsgases zwischen den Portbereichen eine räumliche Komponente in Richtung des Schwerefeldes auf. Dies kann z.B. dadurch erreicht werden, dass in dem Brennstoffzellenstapel der Portbereich zur Zuführung der Reaktionsgase oberhalb (in Richtung des Schwerefeldes gesehen) des Portbereichs der Abführung der Reaktionsgase angeordnet ist. Dadurch wird verhindert, dass das Reaktionsgas in den Gaskanälen entgegen der Richtung der Schwerkraft strömt. Außerdem kommt es im Fall von Kondensatbildung nicht zu Wasserablagerungen innerhalb der Gaskanäle. Hieraus ergeben sich weitere Vorteile hinsichtlich der Leistung der Brennstoffzelle.

In einer vorteilhaften Ausführung der Erfindung weist der Brennstoffzellenstapel eine Verteilerstruktur für ein Kühlmedium auf. Das Kühlmedium, vorzugsweise Luft, und das Reaktionsgas strömen vorteilhaft im Gleichstrom durch den Brennstoffzellenstapel. Dadurch erhöht sich die Temperatur des Reaktionsgases kontinuierlich entlang des Gaskanals und es ergibt sich im Gaskanal aufgrund des anfallenden Produktwassers ein steigender Wasserdampfpartialdruck. Die relative Feuchte des Reaktionsgases in dem Gaskanal kann somit über die gesamte Kanallänge zwischen den Portbereichen nahezu konstant gehalten werden. Dadurch wird entlang des Gaskanals eine homogene Befeuchtung des Reaktionsgases sowie der MEA erreicht, woraus sich weitere Vorteile hinsichtlich einer verbesserten Langzeitbeständigkeit der Brennstoffzelle ergeben.

Die Erfindung sowie weitere Vorteile werden im folgenden anhand von Ausführungsbeispielen unter Bezugnahme von Zeichnungen näher erläutert. Sie zeigen:
- Fig. 1: eine Verteilerplatte mit serpentinenförmigen Gaskanälen gemäß dem Stand der Technik,
- Fig. 2: eine erste Ausführung einer erfindungsgemäßen Verteilerplatte mit 3 Kanal- gebieten, wobei die Gaskanalabschnitte der Gaskanäle der Kanalgebiete parallel zueinander ausgeführt sind,
- Fig. 3: eine zweite Ausführung einer erfindungsgemäßen Verteilerplatte mit 3 Ka- nalgebieten, wobei die Gaskanalabschnitte der Gaskanäle der Kanalgebiete nicht parallel ausgeführt sind,
- Fig. 4: einen Vergleich der Zellspannung einer Verteilerplatte mit serpentinenförmi- gen Gaskanälen gemäß dem Stand der Technik und der Zellspannung einer Verteilerplatte mit erfindungsgemäßen Kanalgebieten.

Fig. 2 zeigt eine Ausführung einer erfindungsgemäßen Verteilerplatte **1** mit 3 Kanalgebieten 2 (gestrichelter Bereich). Innerhalb der Kanalgebiete **2** verlaufen die Gaska-näle **3** jeweils serpentinenförmig, wobei zwischen den Umlenkungen Gaskanalabschnitte **4** ausgeführt sind. Diese Gaskanalabschnitte **4** eines Gaskanals **3** sind in dieser Ausführung parallel zueinander angeordnet und weisen jeweils die gleiche Länge auf.
Zwischen dem Portbereich **5** zur Zuführung des Reaktionsgases und den Kanalgebieten **2** verlaufen Verbindungskanäle **6**. Dabei verbindet jeweils genau ein Verbindungskanal **6** den Portbereich **5** mit einem Ende des serpentinenförmigen Gaskanals **3** eines Kanalgebietes **2**. Das andere Ende des serpentinenförmigen Gaskanals **3** ist mittels eines weiteren Verbindungskanals **7** mit dem Portbereich **8** zur Abführung des Reaktionsgases verbunden. Das Reaktionsgas gelangt somit durch einen durchgängigen Kanal, der den Verbindungskanal **6**, den Gaskanal **3** und den Verbindungskanal **7** umfasst, vom Zuführungsportbereich **5** zum Abführungsportbereich **8** der Verteilerplatte **1.** Innerhalb dieses Kanals bildet sich aufgrund der Strömung ein Druckgradient aus, welcher eine gleichmäßige Verteilung des Reaktionsgases entlang des Kanals gewährleistet.

Zwischen den in den Kanalgebieten **2** parallel angeordneten Gaskanalabschnitten **4** eines Gaskanals **3** bildet sich ein geringer Druckgradient aus. Aufgrund dieses Druckgradienten kommt es zu einer definierten Querströmung zwischen benachbarten Gaskanalabschnitten **4**. Diese Querströmung passt sich dabei an den Druckgradienten an, der an der jeweiligen Stelle eines Gaskanalabschnittes **4** herrscht. Das bedeutet, dass die transportierte Gasmenge zwischen den Gaskanalabschnitten **4** über die gesamte Länge des Gaskanalabschnitts **4** variiert.
Es sei an dieser Stelle noch einmal betont; dass diese Querströmung nur innerhalb eines Gaskanals **3** eines Kanalgebietes **2** stattfindet. Eine unerwünschte Querströmung zwischen benachbarten Kanalgebieten **2** wird mittels der erfindungsgemäßen Anordnung der Gaskanäle **3** unterdrückt.
Durch diese Maßnahmen kann die MEA somit an den Stellen (nicht eingezeichnet) mit Reaktionsgas versorgt werden, an denen die MEA auf der Verteilerplatten aufliegt.

Da die benachbarten Verbindungskanäle **6, 7** unterschiedliche Längen aufweisen, kann es dort zu einer unkontrollierten Querströmung kommen. Um diese Querströmung zu unterdrücken, kann der Abstand zwischen den jeweiligen Verbindungskanälen **6, 7** vergrößert werden und somit an den Druckgradienten zwischen den Verbindungskanälen **6, 7** angepasst werden.

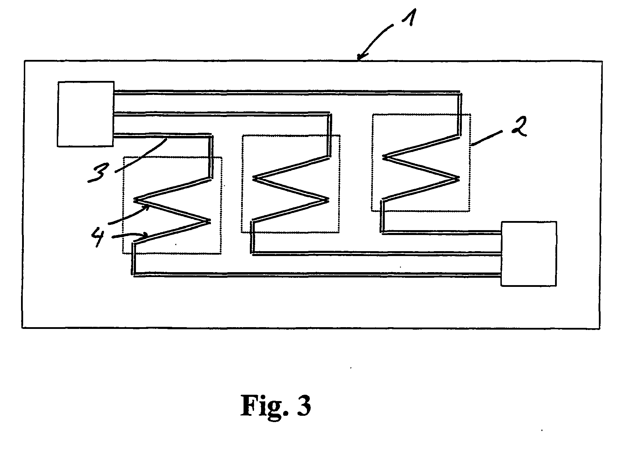

Fig. 3 zeigt eine weitere Ausführung einer erfindungsgemäßen Verteilerplatte **1** mit 3 Kanalgebieten **2**. Da die Anordnung der Gaskanäle **3** in den Kanalgebieten **2** der in Fig. 2 beschriebenen Anordnung entspricht, sei um Wiederholungen zu vermeiden darauf verwiesen.
Die Gaskanalabschnitte **4** sind in Fig. 3 nicht wie in Fig. 2 parallel zueinander angeordnet, sondern bilden einen Winkel (nicht eingezeichnet) zueinander. Der sich so zwischen benachbarten Gaskanalabschnitten **4** keilförmig ausbildende Abstand sorgt dafür, dass die Querströmung zwischen diesen Gaskanalabschnitten **4** auf der gesamten Länge des Gaskanalabschnittes **4** konstant bleibt. Dies resultiert daraus, dass an den Stellen des Gaskanalabschnittes **4**, an denen ein hoher Druckgradient herrscht auch ein großer Abstand zum benachbarten Gaskanalabschnitt **4** vorhanden ist. An Stellen mit geringem Druckverlust ist der Abstand geringer. Somit wird erreicht, dass die Querströmung, also die von einem Gaskanalabschnitt **4** zu dem benachbarten Gaskanalabschnitt **4** transportierte Gasmenge konstant bleibt.

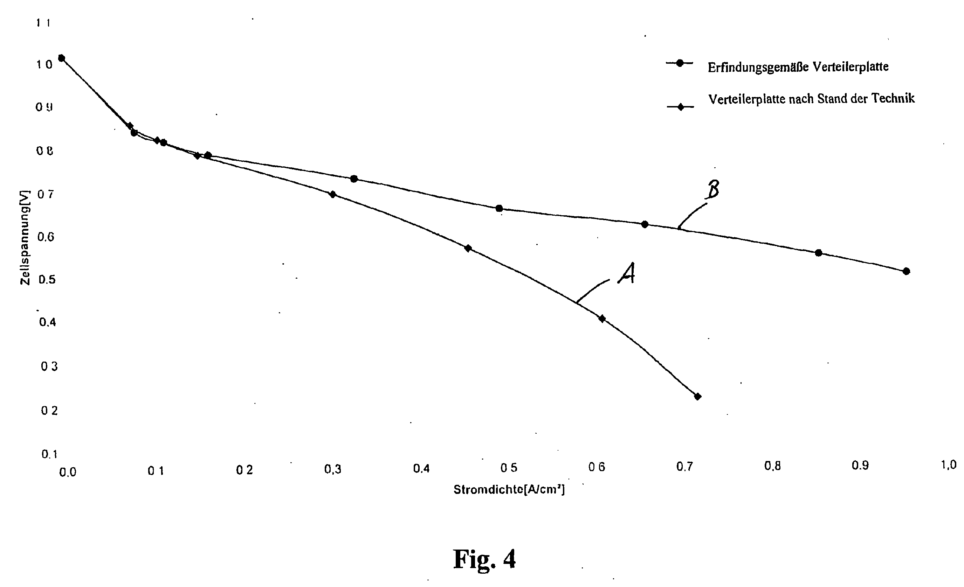

Fig. 4 zeigt einen Vergleich der Zellspannung **A** einer Verteilerplatte mit serpentinenförmigen Gaskanälen gemäß dem Stand der Technik und der Zellspannung **B** einer Verteilerplatte mit erfindungsgemäßen Kanalgebieten. In dem beispielhaften Diagramm ist die Zellspannung der Brennstoffzelle über die Stromdichte aufgetragen. Die Betriebstemperatur der Brennstoffzelle beträgt dabei 70°C. Als Kathodengas wird Luft und als Anodengas Wasserstoff verwendet.
Der Verlauf der Zellspannung zeigt, dass im Bereich niedriger Stromdichte (bis ca. 0,15 A/cm²) kein wesentlicher Unterschied zwischen den Verteilerplatten auftritt. Mit zunehmender Stromdichte zeigt sich allerdings ein starker Abfall der Zellspannung **A**. Bei einer Stromdichte von ca. 0,7 A/cm² wird eine Zellspannung von ca. 0,2 V gemessen.
Für die Zellspannung **B** der Brennstoffzelle mit den erfindungsgemäßen Kanaigebieten wird bei einer Stromdichte von ca. 0,7 A/cm² allerdings eine Zellspannung von ca. 0,6 V gemessen. Auch bei größeren Stromdichten sind noch große Zellspannungen messbar. So wird bei einer Stromdichte von 0,95 A/cm² noch eine Zellspannung von 0,5 V gemessen.
Der Verlauf der Messkurven zeigt deutlich, dass mit einer Verteilerplatte mit den erfindungsgemäßen Kanalgebieten eine höhere Brennstoffzellenleistung erzielt werden kann.

## Patentansprüche

1. Elektrochemischer Brennstoffzellenstapel, umfassend eine Membran-Elektroden-Einheit und eine Verteilerplatte, welche einen Kanalbereich mit Gaskanälen zur Verteilung des Anoden- oder Kathodengases an die Membran-Elektroden-Einheit, einen Portbereich zur Zuführung des Anoden- und/oder Kathodengases in den Kanalbereich und einen Portbereich zur Abführung des Anoden- und/oder Kathodengases aus dem Kanalbereich umfasst, **dadurch gekennzeichnet, dass** die Gaskanäle im Kanalbereich der Verteilerplatte nicht in einem Bündel zusammengefasst, sondern entflochten und auf mehrere voneinander getrennte Kanalgebiete verteilt sind, wobei in einem Kanalgebiet genau ein Gaskanal mit mindestens einer Umlenkung zwischen den Portbereichen zur Zu- und Abführung des Anoden- und/oder Kathodengases verläuft.

2. Brennstoffzellenstapel nach Anspruch 1, **dadurch gekennzeichnet, dass** der Abstand zwischen benachbarten Gaskanalabschnitten eines Gaskanals an den zwischen den Gaskanalabschnitten herrschenden Druckgradienten angepasst werden kann.

3. Brennstoffzellenstapel nach einem der vorangehenden Ansprüche, **dadurch gekennzeichnet, dass** die Strömung des Anoden- und Kathodengases zwischen den Portbereichen eine räumliche Komponente in Richtung des Schwerefeldes aufweist.

4. Brennstoffzellenstapel nach einem der vorangehenden Ansprüche, **dadurch gekennzeichnet, dass** der Brennstoffrellenstapel eine Verteilerstruktur für ein Kühlmedium aufweist und dass das Kühlmedium in der Kühlmediumverteilerstruktur und das Anoden- und/oder Kathodengas in den Kanalgebieten im Gleichstrom strömen.

## Claims

1. Electrochemical fuel cell stack, comprising a membrane electrode assembly and a distributor plate which comprises a channel region with gas channels for distributing the anode or cathode gas to the membrane electrode assembly, a port region for supplying the anode and/or cathode gas to the channel region and a port region for removing the anode and/or cathode gas from the channel region, **characterised in that** the gas channels in the channel region of the distributor plate are not combined in a group, but rather disentangled and distributed among several separate channel areas, wherein in a channel area precisely one gas channel has at least one deflection between the port regions for the supply and removal of the anode and/or cathode gas.

2. Fuel cell stack according to claim 1, **characterised in that** the distance between adjacent gas channel sections of a gas channel can be adapted to the pressure gradient prevailing between the gas channel sections.

3. Fuel cell stack according to any of the preceding claims, **characterised in that** the flow of the anode and cathode gas between the port regions has a spatial component in the direction towards the gravitational field.

4. Fuel cell stack according to any of the preceding claims, **characterised in that** the fuel cell stack comprises a distributor structure for a cooling medium and **in that** the cooling medium flows in the cooling medium distributor structure and the anode and/or cathode gas flows in the channel regions, both fluids flowing in parallel flow.

## Revendications

1. Empilement de cellules électrochimiques, comprenant une unité membrane-électrodes et une plaque de distribution qui présente une zone de canaux comportant des canaux à gaz servant à distribuer le gaz d'anode ou de cathode à l'unité membrane-électrodes, une zone d'entrée pour acheminer le gaz d'anode et / ou le gaz de cathode dans la zone de canaux et une zone de sortie pour évacuer le gaz d'anode et / ou le gaz de cathode présent dans la zone de canaux, **caractérisé en ce que**
les canaux à gaz dans la zone de canaux de la plaque de distribution ne sont pas réunis sous la forme d'un faisceau mais sont séparés et répartis sur plusieurs régions de canaux séparées, dans une zone de canaux s'étend exactement un canal à gaz comportant au moins une déviation entre les zones d'entrée et de sortie pour acheminer et évacuer le gaz d'anode et/ou de cathode.

2. Empilement de cellules électrochimiques selon la revendication 1, **caractérisé en ce que** la distance entre les sections de canaux à gaz adjacents d'un canal à gaz peut être adaptée aux gradients de pression régnant entre les sections de canaux à gaz.

3. Empilement de cellules électrochimiques selon l'une quelconque des revendications précédentes, **caractérisé en ce que** le flux du gaz d'anode et de cathode présente entre les zones d'accès un composant dans l'espace de la direction du champ de gravitation.

4. Empilement de cellules électrochimiques selon l'une quelconque des revendications précédentes, **caractérisé en ce que** l'empilement de cellules électrochimique présente une structure de répartition pour un réfrigérant et **en ce que** le réfrigérant s'écoule dans la structure de répartition de réfrigérant et le gaz d'anode et / ou de cathode dans les zones de canaux dans le même sens.
